# EUROPÄISCHE PATENTANMELDUNG

(11) **EP 2 441 941 A2**
(43) Veröffentlichungstag der Anmeldung: **18.04.2012**
(21) Anmeldenummer: 11008180.9
(22) Anmeldetag: 10.10.2011
(51) Int. Cl.: F02D 19/08, F02D 41/00, F02B 43/00, F02M 21/02, F02M 43/04

(54) **Verbrennungsmotor sowie Nach/Umrüstsatz für einen solchen Verbrennungsmotor**

(30) Priorität: 12.10.2010 DE 102010048910
(71) Anmelder: Trzmiel, Alfred, 72622 Nürtingen (DE)
(72) Erfinder: Trzmiel, Alfred, 72622 Nürtingen (DE)
(74) Vertreter: Kohl, Karl-Heinz

(57) **Zusammenfassung**

Der Verbrennungsmotor (1) hat Verbrennungsräume, in die flüssiger und gasförmiger Kraftstoff zusammen mit angesaugter Luft eingeleitet wird. In dem Bereich, in dem ein schädlicher HC-Überschuss entsteht, wird der Verbrennungsmotor (1) zumindest überwiegend mit nur einer Art von Kraftstoff betrieben.

Um bestehende Verbrennungsmotoren (1) einfach umrüsten zu können, kann der Nach/Umrüstsatz verwendet werden. Es wird lediglich die bestehende Sauganlage (27) abgenommen und eine Halteplatte zwischen den Zylinderköpfen des Verbrennungsmotors (1) und der Saugrohranlage (27) eingesetzt.

## Beschreibung

Die Erfindung betrifft einen Verbrennungsmotor nach dem Oberbegriff des Anspruches 1 sowie einen Nach/Umrüstsatz für einen solchen Verbrennungsmotor nach dem Oberbegriff des Anspruches 11.

Es sind Verbrennungsmotoren bekannt, die mit flüssigem Kraftstoff, wie Benzin oder Diesel, und gasförmigem Kraftstoff betrieben werden.

Der Erfindung liegt die Aufgabe zugrunde, den gattungsgemäßen Verbrennungsmotor sowie den gattungsgemäßen Nach/Umrüstsatz so auszubilden, dass ein kostensparender und nur geringe Emissionen erzeugender Betrieb gewährleistet ist.

Diese Aufgabe wird beim gattungsgemäßen Verbrennungsmotor erfindungsgemäß mit den kennzeichnenden Merkmalen des Anspruches 1 und beim gattungsgemäßen Nach/Umrüstsatz erfindungsgemäß mit den kennzeichnenden Merkmalen des Anspruches 11 gelöst.

Der erfindungsgemäße Verbrennungsmotor zeichnet sich dadurch aus, dass er im Normalbetrieb mit einer Mischung aus gasförmigem und flüssigem Kraftstoff betrieben wird. Sobald jedoch während des Betriebes ein schädlicher HC-Überschuss auftritt, wird der Verbrennungsmotor nur noch mit einer Art von Kraftstoff oder, sofern geringe, nicht störende Zusätze einer anderen Kraftstoffart verwendet werden, zumindest überwiegend mit nur einer Art von Kraftstoff betrieben. Bei einem Dieselmotor wird in diesem Falle nur oder überwiegend Dieselkraftstoff eingesetzt. Handelt es sich um einen Ottomotor, dann kann wahlweise Benzin oder der gasförmige Kraftstoff allein bzw. überwiegend allein eingesetzt werden, um die HC-Werte in den zulässigen Wertebereich zu bringen. Um diesen HC-Überschuss zu erfassen, können beispielsweise Sensoren eingesetzt werden, die die HC-Werte im Abgas des Verbrennungsmotors erfassen und die Messwerte als Signale einer Steuereinheit zuführen. Mit ihr erfolgt dann eine Steuerung oder auch Regelung derart, dass der HC-Wert im Abgas wieder in einen zulässigen Bereich gelangt. Dann wird mit der Steuereinheit wiederum ein Mischbetrieb eingestellt, bei dem der Verbrennungsmotor mit einer Mischung aus flüssigem und gasförmigem Kraftstoff betrieben wird.

Unter gasförmigem Kraftstoff ist sowohl nur eine Art von Gas als auch eine Mischung von wenigstens zwei Gasen zu verstehen.

Vorteilhaft erfolgt der Betrieb in nur einer oder zumindest überwiegend nur in einer Kraftstoffart beim Start und/oder im Leerlauf des Verbrennungsmotors. Hierbei wird vorzugsweise flüssiger Kraftstoff eingesetzt.

Auch im Volllastbereich können erhöhte HC-Werte auftreten, so dass auch in diesem Bereich der Verbrennungsmotor vorteilhaft mit nur einer oder zumindest überwiegend nur mit einer Art von Kraftstoff betrieben wird. Es ist aber auch möglich, im Volllastbereich flüssigen und gasförmigen Kraftstoff einzusetzen. Dadurch kann der Wirkungsgrad und auch die Leistung des Verbrennungsmotors erhöht werden.

Schließlich ist es auch möglich, auf einen Ein-Kraftstoff-Betrieb umzuschalten, wenn der Verbrennungsmotor im Transientenbereich arbeitet. Ein-Kraftstoff-Betrieb bedeutet, dass bevorzugt nur eine Art von Kraftstoff verwendet wird. Es können auch in diesem Fall geringe, nicht störende Zusätze einer anderen Kraftstoffart eingesetzt werden. Dann wird der Verbrennungsmotor immer noch zumindest überwiegend mit nur einer Art von Kraftstoff betrieben.

Der Verbrennungsmotor wird bei Diesel als flüssiger Kraftstoff in dem Bereich, in dem ein schädlicher HC-Überschuss entsteht, vorteilhaft ausschließlich oder zumindest überwiegend ausschließlich mit Diesel betrieben.

Ist der Verbrennungsmotor ein Ottomotor, dann wird vorteilhaft Benzin oder der gasförmige Kraftstoff als alleiniger oder zumindest überwiegend ausschließlich alleiniger Kraftstoff in dem Bereich eingesetzt, in dem beim Mischbetrieb ein schädlicher HC-Überschuss entsteht.

Bei einer vorteilhaften Ausführungsform wird der flüssige bzw. gasförmige Kraftstoff exzentrisch nahe am Einlassventil in ein Saugrohr oder in einen Saugkanal eingespritzt.

Bei einem Dieselmotor wird der gasförmige Kraftstoff durch eine Einspritzdüse exzentrisch nahe am Einlassventil in das Saugrohr oder in den Saugkanal eingespritzt. Beim Öffnen des Einlassventils wird das Gas/LuftGemisch in den Verbrennungsraum eingesaugt. Sobald die Verdichtung beginnt, wird der Dieselkraftstoff eingespritzt und alles entzündet sich.

Bei einem Otto- bzw. Benzinmotor erfolgt die Einspritzung des flüssigen Kraftstoffes in das Saugrohr nahe dem Einlassventil. Das Flüssigkraftstoff/Luft-Gemisch strömt beim Öffnen des Einlassventils in den Verbrennungsraum. Der gasförmige Kraftstoff wird über wenigstens eine im Zylinderkopf vorgesehene Gasdüse direkt in den Verbrennungsraum eingedüst.

Vorteilhaft ist der Einspritzdruck des gasförmigen Kraftstoffes durch wenigstens ein Druckregelventil an alle Betriebszustände anpassbar. Dadurch ist es möglich, den Einspritzdruck lastabhängig und/oder emissionsabhängig und/oder drehzahlabhängig zu regeln.

Der erfindungsgemäße Nach/Umrüstsatz ermöglicht es, bestehende Verbrennungsmotoren einfach umzurüsten. Es wird lediglich die bestehende Sauganlage abgenommen und die Halteplatte zwischen den Zylinderköpfen des Verbrennungsmotors und der Saugrohranlage eingesetzt. Die Halteplatte enthält die Einspritzdüsen für den gasförmigen Kraftstoff, an welche die Zuführleitungen angeschlossen werden können. Es ist auch möglich, dass die Zuführleitungen bereits an die Einspritzdüsen angeschlossen sind.

Weitere Merkmale der Erfindung ergeben sich aus den weiteren Ansprüchen, der Beschreibung und den Zeichnungen.

Die Erfindung wird nachstehend anhand zweier in den Zeichnungen dargestellter Ausführungsformen näher erläutert. Es zeigen
- Fig. 1: in schematischer Darstellung eine erfindungsgemäße Vorrichtung,
- Fig. 2: in einer Darstellung entsprechend Fig. 1 eine zweite Ausführungsform einer erfindungsgemäßen Vorrichtung,
- Fig. 3: in schematischer Darstellung ein Saugrohr, in das exzentrisch eine Einspritzdüse für gasförmigen Kraftstoff ragt,
- Fig. 4: in Draufsicht die exzentrische Eindüsung des gasförmigen Kraft3.16stoffes in die Saugrohre der erfindungsgemäßen Vorrichtung,
- Fig. 5: in schematischer Darstellung einen erfindungsgemäßen Nach/ Umrüstsatz.

Mit den im Folgenden zu beschreibenden Vorrichtungen ist es möglich, einen Verbrennungsmotor 1 mit flüssigem Kraftstoff, mit einer Mischung aus einem flüssigen und einem gasförmigen Kraftstoff oder aus einer Mischung von unterschiedlichen Gasen oder einem gasförmigen Kraftstoff zu betreiben. Im Folgenden wird eine Ausführungsform beschrieben, bei der ein flüssiger und ein gasförmiger Kraftstoff verwendet werden. Die Erfindung ist allerdings auf dieses Ausführungsbeispiel nicht beschränkt.

Der Verbrennungsmotor 1 ist vorteilhaft ein Dieselmotor, der je nach Ausstattung eine entsprechende Zahl von Zylindern aufweist, in deren Brennkammern der jeweilige Kraftstoff eingespritzt wird. Der flüssige Kraftstoff, vorzugsweise Dieselkraftstoff, befindet sich in einem Tank 2, aus dem der Kraftstoff in bekannter Weise über Ventile 3 in die jeweiligen Verbrennungsräume eingespritzt wird. Die in den Verbrennungsräumen entstehenden Abgase gelangen in eine Abgasleitung 4, über die die Abgase über einen Katalysator 6 und/oder einen Rußfilter und eine Auspuffleitung 7 einem Auspuff des Fahrzeuges zugeführt werden. Der Katalysator 6 ist mit der Abgasleitung 4 durch eine Leitung 5 verbunden.

Den Verbrennungsräumen des Verbrennungsmotors 1 kann zusätzlich ein gasförmiger Kraftstoff zugeführt werden, der in einem Gastank 9 untergebracht ist. Als gasförmiger Kraftstoff kommen Erdgas, Methan, Wasserstoff, Flüssiggas, Biogas und andere bekannte Gase in Betracht. Der Gastank 9 ist über eine Zuführleitung 10 an ein Common Rail 11 angeschlossen, über das der gasförmige Kraftstoff mit Hilfe von Einspritzdüsen 12 der Ansaugluft zugemischt und so in die Verbrennungsräume des Verbrennungsmotors 1 geführt wird. In der Zuführleitung 10 sitzen ein Druckregelventil 13, ein Gaseinfüllstutzen 14 und ein Gasfilter 15. Über den Gaseinfüllstutzen 14 wird das Gas in den Tank 9 nachgefüllt. Mit dem Druckregelventil wird sichergestellt, dass das Gas im Tank 9 unter dem notwendigen Druck steht. Das Gasfilter 15 sorgt dafür, dass keine Schmutzteilchen in den jeweiligen Verbrennungsraum gelangen. Beim Nachfüllvorgang ist beispielsweise durch ein entsprechendes Ventil sichergestellt, dass das nachzufüllende Gas nicht in das Common Rail 11 gelangt.

Von der Leitung 5 zweigt eine Querleitung 16 ab, in der ein Abgasrückführventil 17 sitzt. Mit ihm kann ein Teil des Abgases über die Querleitung 16 einer Zuführleitung 18, in der die Ansaugluft geführt wird, zugeführt werden, über welche Abgas rückgeführt wird. Das Ventil 17 ist Teil einer Rückführeinheit 19, mit der in bekannter Weise ein Teil der Abgase dem Gemisch aus flüssigem und gasförmigem Kraftstoff zugeführt wird, um die Verbrennungsgeschwindigkeit zu beeinflussen sowie um den λ-Wert (Luft/Brennstoff-Verhältnis) zu optimieren. Da solche Rückführeinheiten 19 bekannt sind, werden sie auch nicht näher erläutert.

Außer der Einheit 19 ist ein Turbolader 20 vorgesehen, mit dem Außenluft über einen nachgeschalteten Zwischenkühler sowie eine nachgeschaltete Drosselklappe 22 den Verbrennungsräumen der Verbrennungsmaschine 1 in bekannter Weise zugeführt werden kann. Die Zuführung der Frischluft mit Hilfe des Turboladers 20 erfolgt über die gleiche Zuführleitung 18, über die auch ein Teil des Abgases mit Hilfe der Einheit 19 zugeführt wird.

Mit Hilfe von Sonden 23 und 24 wird der Schadstoffanteil in dem durch die Leitung 5 strömenden Abgas erfasst. Beispielsweise wird mit der Sonde 23 in Strömungsrichtung hinter dem Katalysator 6 der HC-Gehalt und mit der Sonde 24 in Strömungsrichtung vor dem Katalysator 6 der 02-Gehalt im Abgas erfasst. Die Messwerte werden einer Steuereinheit 25 zugeführt, die in bekannter Weise die Bedingungen in den Verbrennungsräumen des Verbrennungsmotors 1 so steuert, dass die von den Sonden 23, 24 gemessenen Werte unterhalb bzw. oberhalb vorgegebener gesetzlicher Grenzwerte liegen.

Zur Steuerung der Gaszuführung ist eine gesonderte Steuereinheit 26 vorgesehen.

Bei der beschriebenen Vorrichtung kann der flüssige Kraftstoff zusammen mit dem gasförmigen Kraftstoff oder auch unabhängig von ihm genutzt werden. Der für die Gaszuführung vorgesehene Teil der Vorrichtung kann als Umbau- bzw. Nachrüstsatz ausgebildet sein, so dass auch bestehende Verbrennungsmotoren 1 mit der beschriebenen Technik ausgerüstet werden können. Die Vorrichtung ist für PKWs, Busse, Lastwagen und dergleichen geeignet. Der Umbausatz, der noch näher beschrieben werden wird, besteht aus einfachen Komponenten, die nicht nur kostengünstig hergestellt, sondern auch einfach montiert werden können.

Von der Zuführleitung 18 gelangt die Ansaugluft in Saugrohre 27, die die Ansaugluft zu den Verbrennungsräumen führen. Die Saugrohre 27 sind in vorteilhafter Weise als Drallrohre ausgebildet. Die jeweilige Gaseinspritzdüse 12 ist nahe an einem oder an beiden Einlassventilen zum Verbrennungsraum vorgesehen.

Bei einer vorteilhaften Ausführung sind die Saugrohre 27 so ausgeführt, dass die Einspritzdüse 12 durch asymmetrische Befüllung eine Schichtladung zwischen dem Gemisch aus flüssigem Kraftstoff und Luft und dem Gemisch aus Luft und gasförmigem Kraftstoff ermöglicht, wodurch eine hervorragende gleichmäßige Verbrennung des Gemisches im Brennraum des Motorzylinders erreicht wird.

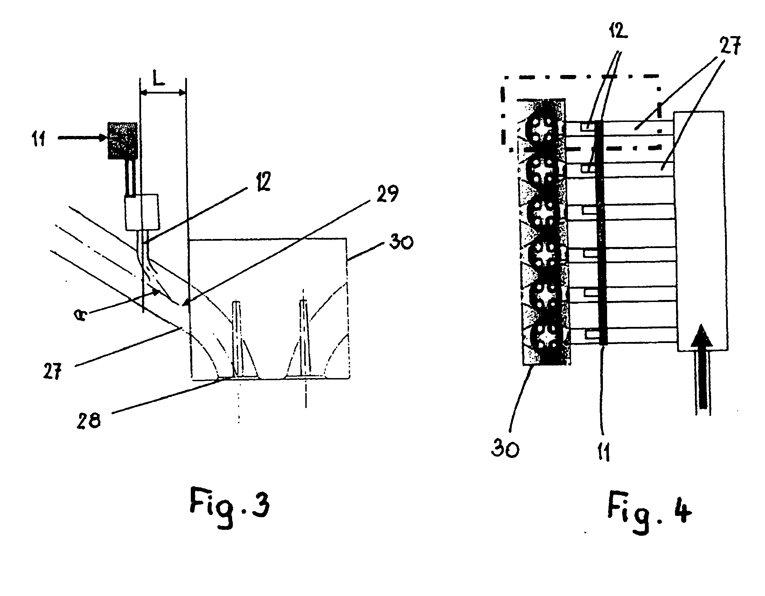

Wie Fig. 3 zeigt, mündet die Einspritzdüse 12 nahe einem Einlassventil 28 so in das Saugrohr 27, dass der aus der Einspritzdüse 12 austretende gasförmige Kraftstoff in gleicher Richtung strömt wie die Ansaugluft durch das Saugrohr 27. Erkennbar ist, dass die Mündung der Einspritzdüse 12 Abstand von der Längsmittelachse 29 des Saugrohres 27 hat. Das freie Ende der Einspritzdüse 12 bildet ein Gaseindüsrohr, dessen Längsachse mit der Längsmittelachse 29 des Saugrohres 27 den spitzen Winkel α bildet.

Die Einspritzdüse 12 ist an das Common Rail 11 angeschlossen. Der Abstand L zwischen der Achse der Einspritzdüse 12 und dem Zylinderkopf 30 des Verbrennungsmotors ist gering.

Fig. 4 zeigt, dass vorteilhaft sämtliche Einspritzdüsen 12 exzentrisch in Bezug auf die Saugrohre 27 angeordnet und vorteilhaft nahe den Einlassventilen zu den Verbrennungsräumen des Verbrennungsmotors angeordnet sind. Die Ladeluft bzw. Ansaugluft ist durch einen Strömungspfeil in Fig. 4 angedeutet.

Das Saugrohr 27 kann so ausgebildet sein, dass die Einspritzdüse 12 nahe an einem der Einlassventile des jeweiligen Brennraumes angeordnet ist (Fig. 3 bis 5).

Auf jeden Fall ist das Saugrohr 27 so vorgesehen, dass eine optimale Mischung zwischen der Ansaugluft, dem Abgas und dem frisch zugeführten Gas ermöglicht wird.

Das Saugrohr 27 ist auf jeden Fall so ausgebildet, dass es eine optimale Mischung zwischen dem frischen Gas und dem rückgeführten Abgas über die Einrichtung 19 gewährleistet.

Je nach Anwendungsfall können die Saugrohre 11 beheizt oder gekühlt werden.

Die Saugrohre 11 können vorteilhaft Teil eines Moduls sein, das bei den gängigen Verbrennungsmotoren eingesetzt werden kann, insbesondere bei allen 6-, 8-, 10- und 12-Zylinder-Motoren.

Das Druckregelventil 13 ist vorteilhaft direkt am Gasaustritt des Gastanks 9 angebracht. Dabei ist das Druckregelventil 13 vorteilhaft so ausgebildet, dass es auch als Sicherheitsventil dienen kann.

Das Druckregelventil 13 wird durch mechanische und/oder elektrische Signale betätigt, um die Arbeitsdruckhöhe einzustellen. Hierzu ist das Druckregelventil 13 an die Steuereinheit 26 angeschlossen. Das Druckregelventil 13 ist so ausgebildet, dass eine vorgegebene Druckhöhe des Gases nicht überschritten wird. Vorteilhaft steuert die Steuereinheit 26 das Druckregelventil 13 so, dass der Einspritzdruck in die Verbrennungsräume des Motors 1 angepasst wird an den Lastbereich, in dem der Motor betrieben wird.

Sollte der Druck des Gases einen vorgegebenen Wert überschreiten, dann kann das Druckregelventil 13 eine Beschädigung des Systems verhindern.

Bei einer Ausführungsform wird in diesem Falle ein Sicherheitsventil geöffnet, so dass bei einem zu hohen Gasdruck Gas freigegeben werden kann. Bei einer anderen Ausführungsform wird mit dem Druckregelventil 13 in einem solchen kritischen Fall der Gasdruck im Arbeitsanschluss auf Null geregelt.

Mit dem Druckregelventil 13 kann der Einspritzdruck für den gasförmigen Kraftstoff für alle Betriebszustände angepasst werden. Da das Druckregelventil an die Steuereinheit 26 angeschlossen ist, kann mit ihr der Gaseinspritzdruck lastabhängig, emissionsabhängig oder drehzahlabhängig geregelt werden, um einen optimal arbeitenden Verbrennungsmotor mit möglichst wenig Schadstoffausstoß zu erhalten. Beispielsweise kann mit der Steuereinheit 26 ein Einspritzdruck zwischen etwa 0 und etwa 50 bar eingestellt werden.

Die Signale zwischen der Steuereinheit 26 und dem Druckregelventil 13 können drahtlos oder drahtgebunden übertragen werden. Das Druckregelventil 13 kann über ein Bussystem mit der Steuereinheit 26 verbunden sein. Für eine drahtlose Datenübertragung können beispielhaft Funksignale eingesetzt werden.

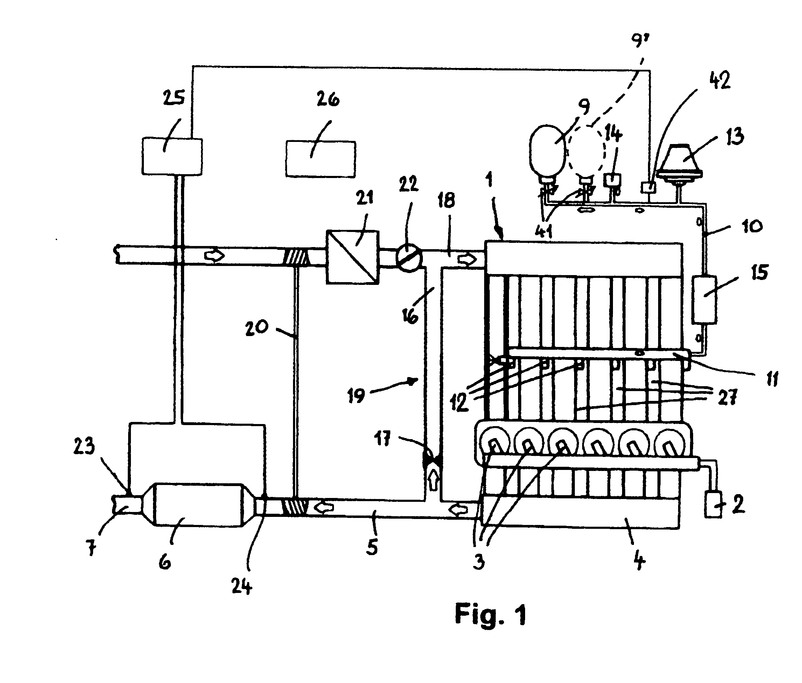

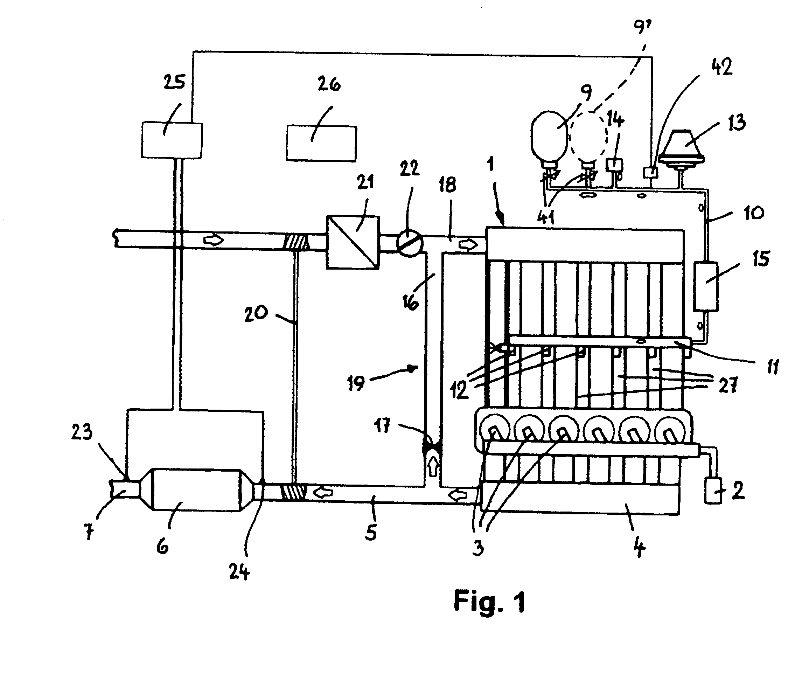

Der Gastank 9 erfüllt die Sicherheitsanforderungen hinsichtlich Auslaufsicherheit und Drucksicherheit. Der Gastank 9 ist mit dem wenigstens einen Einfüllstutzen 14 versehen, der in Fig. 1 nur der Übersichtlichkeit wegen neben dem Gastank eingezeichnet ist. Über die wenigstens eine Zuführleitung 10 ist der Gastank 9 mit dem Common Rail 11 leitungsverbunden.

Auch das Druckregelventil 13 kann unmittelbar am Gastank 9 vorgesehen sein, so dass sich eine einfache und kompakte Ausbildung ergibt. Ebenso kann der Gastank 9 auch alle notwendigen Sensoren enthalten. Damit von außen einfach der Druck des Gases im Gastank 9 erkennbar ist, ist er vorteilhaft mit einer entsprechenden Druckanzeige versehen.

Der Gastank 9 kann so ausgebildet sein, dass er mehr als eine Art von Gas aufnehmen kann. Der Tankraum ist dementsprechend mit zwei oder mehr Kammern versehen. In diesem Falle ist der Gaseinfüllstutzen vorteilhaft so ausgebildet, dass er das kombinierte Betanken wenigstens zweier gasförmiger Kraftstoffe ermöglicht.

Die Wände des Gastanks 9 sowie ― bei einer eventuellen Unterteilung in zwei oder mehr Kammern - die Zwischenwände sind selbstverständlich so ausgebildet, dass der gasförmige Kraftstoff nicht nach außen bzw. durch die Trennwände in die benachbarten Kammern gelangen, insbesondere diffundieren kann. Der Gastank 9 kann je nach Ausführung beispielhaft Erdgas, Biogas oder Wasserstoff aufnehmen.

Die verschiedenen Gase können in der Zuführleitung 10 gemischt werden, so dass die Gase gemischt in das jeweilige Saugrohr 27 gelangen.

Bei einer nicht dargestellten Ausführungsform ist es auch möglich, die verschiedenen Gase im Gastank 9 vorzumischen und das Gasgemisch dann über die Zuführleitung 10 dem jeweiligen Saugrohr 27 zuzuführen.

Die unterschiedlichen Gase können aber auch in verschiedenen Gastanks untergebracht sein. In Fig. 1 ist beispielhaft mit gestrichelten Linien ein weiterer Gastank 9' dargestellt, der an die Zuführleitung 10 angeschlossen ist. Die beiden Gastanks 9, 9' enthalten jeweils ein anderes Gas. So kann der Gastank 9 beispielsweise Wasserstoff und der Gastank 9' beispielsweise Erdgas (CNG) oder Biogas enthalten.

Die beiden Gastanks 9, 9' sind über jeweils ein Regelventil 41 an die Zuführleitung 10 angeschlossen. Mit dem Regelventil 41 kann der Druck, mit dem das Gas in die Zuführleitung 10 strömt, eingestellt werden.

Es ist möglich, die Gase aus den Gastanks 9, 9' gleichzeitig in die Zuführleitung 10 einzugeben, so dass bereits in der Zuführleitung die Vermischung der beiden unterschiedlichen Gase erfolgt. Das Gasgemisch gelangt dann über die entsprechende Einspritzdüse 12 in das Saugrohr 27.

Es ist weiter möglich, die unterschiedlichen Gase in den Gastanks 9, 9' nicht gleichzeitig, sondern wechselseitig zuzuführen. Dann wird je nach den vorgegebenen Einsatzbedingungen nur das eine oder das andere Gas dem Saugrohr 27 zugeführt.

Mit einem Sensor 42 lässt sich das Gas oder das Gasgemisch in der Zuführleitung 10 erkennen. Der Sensor 42 sendet ein entsprechendes Signal an die Steuereinheit 25, die in bekannter Weise die Bedingungen in den Verbrennungsräumen des Verbrennungsmotors 1 so steuert, dass das Gas bzw. Gasgemisch im erforderlichen Maße bzw. Mischungsverhältnis zugeführt wird.

Das vom Sensor 42 an die Steuereinheit 25 gelieferte Signal kann insbesondere dazu herangezogen werden, ein in der Steuereinheit 25 hinterlegtes Kennfeld für diesen Bereich automatisch auszuwählen.

Der Nachrüst- bzw. Umrüstsatz für die Zuführung des gasförmigen Kraftstoffes ist so gestaltet, dass er für alle gasförmigen Kraftstoffe eingesetzt werden kann. Auch ist der Nachrüst/Umrüstsatz mit den notwendigen Sensoren versehen, die für alle gasförmigen Kraftstoffe geeignet sind.

Die Steuereinheit 26 kann als stand-alone-Einheit eingesetzt werden. Es ist aber auch möglich, die Steuereinheit 26 als slave-Einheit in Verbindung mit der Steuereinheit 25 einzusetzen (Master-slave-Prinzip). Mit Hilfe der Steuereinheit 26 kann der Füllgrad der Treibstoffanlage erfasst und das Mischungsverhältnis zwischen dem flüssigen und dem gasförmigen Kraftstoff in Abhängigkeit von der geforderten Motorleistung optimiert werden. Hierzu wird die Leistungskennlinie des Motors herangezogen, wobei auch die Emissionen aus CO₂, NOₓ oder Dieselrußausstoß berücksichtigt werden, die von den entsprechenden Sensoren 23, 24 im Abgas gemessen werden. Die Steuereinheit 26 ist in diesem Falle Teil einer Regeleinheit, mit der in Abhängigkeit von den von den Sensoren 23, 24 gemessenen Schadstoffwerten das optimale Mischungsverhältnis zwischen flüssigem und gasförmigen Kraftstoff so eingestellt wird, dass die Emissionswerte unterhalb der gesetzlich vorgeschriebenen Grenzwerte liegen.

Mit der Steuereinheit 26 kann auch festgestellt werden, ob der Gastank 9 eine ausreichende Menge an gasförmigem Kraftstoff enthält. Hierzu ist der Gastank 9 beispielhaft über einen Füllstandsmesser mit der Steuereinheit 26 verbunden. Wird ein ungenügender Ladezustand des Gastankes 9 festgestellt, dann sorgt die Steuereinheit 26 dafür, dass die Zuführung des gasförmigen Kraftstoffes abgestellt und auf den vollständigen Betrieb des Verbrennungsmotors 1 mit dem flüssigen Kraftstoff umgestellt wird. In diesem Falle wird der Verbrennungsmotor 1 ausschließlich mit dem flüssigem Kraftstoff so lange betrieben, bis eine Nachfüllung des gasförmigen Kraftstoffes vorgenommen wird.

Die Steuereinheiten 25 und/oder 26 können vorteilhaft so ausgebildet sein, dass sie bei Bedarf Diagnosesignale liefern, um etwa Wartungen, Reparaturen und dergleichen durchführen zu können.

Die Einspritzdüsen 3, 12 können gemeinsam oder abwechselnd angesteuert werden, so dass die Zuführung des flüssigen sowie des gasförmigen Kraftstoffs zur gleichen Zeit oder zeitlich nacheinander erfolgt. Hierbei können die Einspritzzeiten auch unterschiedlich eingestellt werden, je nach dem erforderlichen Mischverhältnis.

Die beiden Steuereinheiten 25, 26 wirken zusammen, so dass der flüssige und der gasförmige Kraftstoff im gewünschten Maße in die jeweiligen Brennräume der Zylinder eingespritzt werden.

Mit den Steuereinheiten 25, 26 ist außerdem möglich, zusätzlich auch einen wirtschaftlichen Kraftstoffverbrauch einzustellen. Somit erfolgt nicht nur eine Optimierung im Hinblick auf die Abgaswerte, sondern auch im Hinblick auf den günstigsten Kraftstoffverbrauch. Der flüssige und/oder der gasförmige Kraftstoff können hierbei kontinuierlich oder auch sequentiell in die Brennkammern eingespritzt werden. Vorteilhaft erfolgt die Einspritzung entsprechend dem Sauerstoffanteil ebenfalls geregelt kontinuierlich oder auch sequentiell.

Auf die beschriebene Weise ist es somit möglich, die Zuführung des jeweiligen Kraftstoffes optimal im Hinblick auf die Emissionswerte und den Kraftstoffverbrauch für jeden Betriebspunkt (Drehzahl/Drehmoment) einzustellen.

Es können die Steuereinheiten 25, 26 auch so programmiert sein, dass der Verbrauch an flüssigem und gasförmigem Kraftstoff etwa gleich ist, so dass beide Kraftstoffarten gleichzeitig nachgefüllt werden können.

Schließlich ist eine Programmierung auch im Hinblick auf eine große Reichweite möglich. Dieser Gesichtspunkt spielt beispielsweise eine Rolle, wenn das Tankstellennetz nicht sehr dicht ist.

Die aufgeführten Beispiele zeigen, dass die Programmierung im Hinblick auf verschiedene Kriterien erfolgen kann, auch in Kombination miteinander.

Der gasförmige Kraftstoff wird der Ansaugluft zugemischt und der flüssige Kraftstoff direkt eingespritzt. Durch die Voreinspritzung des flüssigen Kraftstoffes wird die Verbrennung eingestellt, so dass die Haupteinspritzung dann in bereits entzündetes Gas in den Brennraum erfolgt.

Mit Hilfe der Steuereinheit 26 ist es möglich, den gasförmigen Kraftstoff über eine oder mehrere der Einspritzdüsen 12 so in die Brennräume einzuspritzen, dass eine Schichtladung im Brennraum erzielt wird. Dadurch wird eine hervorragende Verbrennung des Gemisches aus flüssigem und gasförmigem Kraftstoff gewährleistet.

Mit Hilfe der Einheit 19 ist es darüber hinaus möglich, auch einen Teil des Abgases über das Ventil 17 zurückzuführen und dem Gemisch aus flüssigem und gasförmigem Kraftstoff beizufügen. Dieses Abgas kann den Einspritzdüsen 3 und/oder den Einspritzdüsen 12 zugeführt werden. Über den Anteil des rückgeführten Abgases ist eine weitere Variationsmöglichkeit gegeben, um einen optimalen Betrieb des Verbrennungsmotors 1 bei minimalen Emissionswerten und einem minimalen Kraftstoffverbrauch zu erreichen. Dabei ist dafür gesorgt, dass die Verbrennung in den Brennräumen optimal abläuft, so dass auch ein Verschleiß der mechanischen Teile des Verbrennungsmotors minimal gehalten werden kann.

Die Steuereinheiten 25, 26 sind so ausgebildet, dass im Leerlauf des Verbrennungsmotors 1 nur der flüssige oder der gasförmige Kraftstoff in die Brennräume eingespritzt wird. Insbesondere wird nur ein Kraftstoff eingesetzt, wenn beispielsweise die Kohlenwasserstoffemissionen einen vorgegebenen Wert überschreiten oder die anderen Emissionen zulässige Werte über- oder unterschreiten.

Beim beschriebenen Ausführungsbeispiel wird der gasförmige Kraftstoff vom Gastank 9 aus in das Common Rail 11 eingeleitet. Der gasförmige Kraftstoff wird zusammen mit Luft in das Common Rail 11 eingeführt, so dass über die an das Common Rail 11 angeschlossenen Saugrohre 27 in die jeweiligen Zylinder ein Gemisch aus Luft und gasförmigen Kraftstoff gelangt. Der Luftanteil wird über die Steuereinheit 26 eingestellt, mit der eine (nicht dargestellte) Drosselklappe zur Bestimmung der Luftmenge gesteuert werden kann. Der flüssige Kraftstoff wird vorteilhaft unmittelbar in den Brennraum eingespritzt, nachdem das Gemisch aus Luft und gasförmigem Kraftstoff eingebracht worden ist. Aufgrund der hohen Temperaturen und des hohen Druckes in den Brennräumen beginnt der flüssige Kraftstoff zu verbrennen, wodurch auch der gasförmige Kraftstoff verbrannt wird.

Der Anteil an flüssigem Kraftstoff kann bis etwa zu 60% durch den gasförmigen Kraftstoff ersetzt werden. Da der gasförmige Kraftstoff wesentlich kostengünstiger als der flüssige Kraftstoff ist, ergibt sich eine erhebliche Einsparung an Kraftstoffverbrauchskosten. Dabei führt dieser teilweise Ersatz des flüssigen durch den gasförmigen Kraftstoff zu keiner Beeinträchtigung der Motorleistung, des Drehmoments sowie der Lebensdauer des Verbrennungsmotors. Der gasförmige Kraftstoff wird sehr homogen verbrannt.

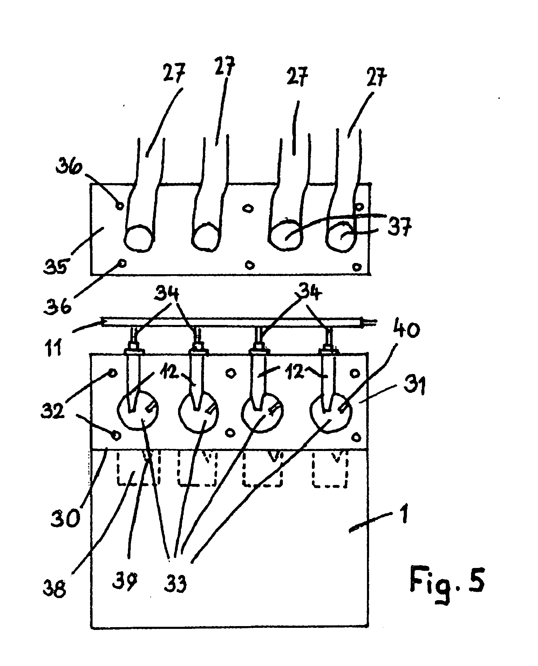

Fig. 5 zeigt schematisch einen Nach/Umrüstsatz, mit dem es möglich ist, bestehende Verbrennungsmotoren sehr einfach und kostengünstig nach- bzw. umzurüsten. Dieser Nach/Umrüstsatz hat eine Halteplatte 31, die auf den Zylinderköpfen 30 des Verbrennungsmotors 1 abgedichtet befestigt wird. Die Halteplatte 31 weist Durchtrittsöffnungen 32 für Stehbolzen auf, die von den Zylinderköpfen 30 abstehen. In der Halteplatte 31 befinden sich Durchlässe 33, in die die Einspritzdüsen 12 ragen. Sie sind in bzw. an der Halteplatte 31 in geeigneter Weise lösbar befestigt. Die Einspritzdüsen 12 sind über Leitungen 34 an das Common Rail 11 angeschlossen.

Die Halteplatte 31 ist als Zwischenflansch ausgebildet, die zwischen den Zylinderköpfen 30 des Verbrennungsmotors 1 und einer Flanschplatte 35 befestigt wird. Sie hat ebenfalls die Durchtrittsöffnungen 36 für die Stehbolzen der Zylinderköpfe 30. An der Flanschplatte 35 sind die Saugrohre 27 befestigt. Für den Durchtritt der über die Saugrohre 27 zugeführten Ansaugluft ist die Flanschplatte 35 mit entsprechenden Durchlässen 37 versehen.

Die Zahl der Durchlässe 33, 37 in der Halteplatte 31 sowie der Flanschplatte 35 richtet sich nach der Zahl der Verbrennungsräume 38 des Verbrennungsmotors 1. Sie sind in Fig. 5 nur schematisch ohne Ein- und Auslassventile dargestellt. Erkennbar ist lediglich eine in den Brennraum 38 ragende Einspritzdüse 39 für den flüssigen Kraftstoff. Die Halteplatte 31 und die Flanschplatte 35 liegen abgedichtet aufeinander und lassen sich sehr einfach auf den Zylinderköpfen 30 montieren. Die Saugrohre 27 werden in bekannter Weise an die Zylinderköpfe 30 angeschlossen. Die Einspritzdüsen 12 ragen, wie anhand der Fig. 3 und 4 erkennbar ist, in die jeweiligen Saugrohre 27. In Fig. 5 sind die Saugrohre 27 und die Einspritzdüsen 12 lediglich der Übersichtlichkeit wegen getrennt voneinander dargestellt.

Die Einspritzdüsen 12 liegen exzentrisch in Bezug auf die Durchlässe 33 der Halteplatte 31.

Vorteilhaft kann in wenigstens einen der Durchlässe 33 ein Sensor 40 ragen, mit dem die Qualität des gasförmigen Kraftstoffes erfasst werden kann. Vorteilhaft ist an jedem Durchlass 33 ein derartiger Sensor 40 vorgesehen.

Die Sensoren 40 sind an die Steuereinheit 26 angeschlossen und senden die Qualität des gasförmigen Kraftstoffes kennzeichnende Signale. Die Steuereinheit 26 kann dann in Abhängigkeit von diesen Sensorsignalen das Mischungsverhältnis zwischen gasförmigem und flüssigem Kraftstoff sowie Ansaugluft so einstellen, dass eine optimale Verbrennung dieses Gemisches in den Brennräumen 38 stattfinden kann.

Mit der neuen Vorrichtung lassen sich bei Diesel-Verbrennungsmaschinen die EURO-Normen III bis V sehr einfach erreichen. Die NOx- sowie die Partikel-Emissionen können bis zu 50% verringert werden, wobei auch der CO₂-Ausstoß erheblich vermindert wird.

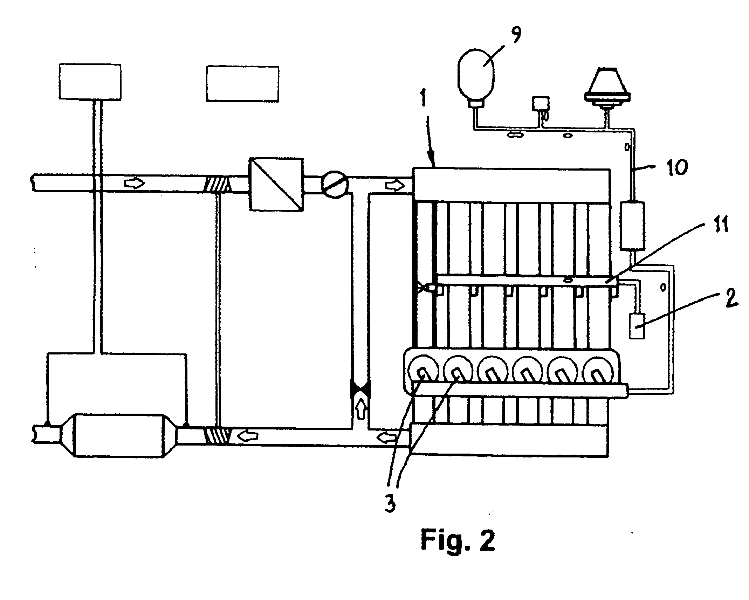

Die Ausführungsform gemäß Fig. 2 unterscheidet sich vom vorigen Ausführungsbeispiel im Wesentlichen dadurch, dass die Zuführung des flüssigen und des gasförmigen Kraftstoffes vertauscht sind. Der gasförmige Kraftstoff wird nicht in das Common Rail 11, sondern über die Ventile 3 direkt in die Brennräume eingespritzt. Dafür wird der flüssige Kraftstoff vom Tank 2 aus mit Niederdruck in das Saugrohr eingespritzt. Eine solche Vorgehensweise hat den Vorteil, dass eine teure Hochdruck-Benzinpumpe sowie das teure Rail eingespart werden können. Diese Ausführungsform eignet sich daher hervorragend für den Einsatz bei Benzinmotoren. Als gasförmiger Kraftstoff wird vorteilhaft Erdgas (CNG) eingesetzt.

Bei einer solchen Ausführungsform können ebenfalls zwei oder mehr Gastanks 9, 9' vorgesehen sein, die in gleicher Weise wie beim Ausführungsbeispiel gemäß Fig. 1 eingesetzt werden können.

Auch bei dieser Ausführungsform ergeben sich für den Autofahrer erhebliche Vorteile, insbesondere Kostenersparnisvorteile, weil der gasförmige Kraftstoff wesentlich preisgünstiger ist als der flüssige Kraftstoff, vorzugsweise Benzin. Darüber hinaus wird zum Einspritzen des flüssigen Kraftstoffes keine teure Hochdruckpumpe und auch kein teures Hochdruckrail benötigt.

Im Vergleich mit einem Verbrennungsmotor, der ausschließlich mit gasförmigem Kraftstoff betrieben wird, ergibt sich bei der gemischten Verwendung von flüssigem und gasförmigen Kraftstoff eine Einsparung um bis zu etwa 30%. Dabei sind die Leistung und das Drehmoment des Verbrennungsmotors 1 in diesem Mischbetrieb höher als im Einstoffbetrieb, bei dem nur der flüssige oder nur der gasförmige Kraftstoff eingesetzt wird.

Die Verteilung des flüssigen und des gasförmigen Kraftstoffes wird vorteilhaft an die Lastpunkte angepasst. Dabei werden die Vorteile der Kraftstoffe ausgenutzt. Der flüssige Kraftstoff ist durch seine Energiedichte und schnelle Verbrennung gekennzeichnet. Darum wird der flüssige Kraftstoff bevorzugt bei dynamischen Beschleunigungsvorgängen und im Leerlauf eingesetzt. Bei Teillast und bei konstanten Betriebsbedingungen wird der gasförmige Kraftstoff zugesetzt. Der zugemischte Anteil des gasförmigen Kraftstoffes wird für jeden Betriebspunkt im Hinblick auf Kraftstoffverbrauch, CO₂-Emissionen und HC- und NOx-Emissionen optimiert. Die Betriebspunkte werden mit unterschiedlichen Eindüsdrücken und optimierten Eindüszeitpunkten betrieben. Bei Volllast wird der gasförmige Kraftstoff möglichst spät mit hohen Drücken eingedüst. Da er durch die Expansion von beispielsweise 220 bar im Gastank 9 auf beispielsweise etwa 8 bis 30 bar stark abgekühlt wird, wird auch das Gemisch im Motorzylinder abgekühlt.

Erdgas ist durch eine Vergleichsoktanzahl von 130 gekennzeichnet. Durch das kühlere Gemisch und die hohe Gemischoktanzahl kann das Verdichtungsverhältnis des Motors angehoben werden, so dass das Volllastdrehmoment gleich bzw. höher und der Kraftstoffverbrauch niedriger wird als im reinen Benzinbetrieb. Durch das größere Verdichtungsverhältnis wird auch der Teillastverbrauch verbessert. Durch den Gas-Flüssig-Kraftstoff-Mischbetrieb bleibt die Reichweite des reinen Flüssigkraftstoffbetriebes erhalten und die Gasdüsen nehmen einen kleineren Einbauraum ein, der es erlaubt, z.B. die Benzin-Gas-Düsen ohne große Änderungen am Motor durch Gas-Einspritzdüsen zu ersetzen.

Anstelle von Benzin können auch Methanol, Ethanol oder ähnliche Kraftstoffe eingesetzt werden. Ebenso kann als gasförmiger Kraftstoff außer Erdgas beispielsweise auch Flüssiggas (LPG), Biogas, Wasserstoff und dergleichen verwendet werden.

Auch bei dieser Ausführungsform kann der Verbrennungsmotor 1 mit nur einer Art von Kraftstoff betrieben werden. Es ist daher unerheblich, ob während der Fahrt der flüssige oder der gasförmige Kraftstoff ausgeht.

## Patentansprüche

1. Verbrennungsmotor mit Verbrennungsräumen, in die flüssiger und gasförmiger Kraftstoff zusammen mit angesaugter Luft eingeleitet wird, **dadurch gekennzeichnet, dass** der Verbrennungsmotor (1) in dem Bereich, in dem ein schädlicher HC-Überschuss entsteht, zumindest überwiegend mit nur einer Art von Kraftstoff betrieben wird.

2. Verbrennungsmotor nach Anspruch 1,
**dadurch gekennzeichnet, dass** der Verbrennungsmotor (1) beim Start und/oder im Leerlauf mit nur einer Art oder zumindest überwiegend nur einer Art von Kraftstoff, vorzugsweise mit flüssigem Kraftstoff, betrieben wird.

3. Verbrennungsmotor nach Anspruch 1 oder 2,
**dadurch gekennzeichnet, dass** der Verbrennungsmotor (1) im Volllastbereich mit nur einer Art oder zumindest überwiegend nur einer Art von Kraftstoff betrieben wird.

4. Verbrennungsmotor nach Anspruch 1 oder 2,
**dadurch gekennzeichnet, dass** der Verbrennungsmotor (1) im Volllastbereich mit flüssigem und gasförmigem Kraftstoff betrieben wird.

5. Verbrennungsmotor nach einem der Ansprüche 1 bis 4,
**dadurch gekennzeichnet, dass** der Verbrennungsmotor (1) im Transientenbereich mit nur einer Art oder zumindest überwiegend mit nur einer Art von Kraftstoff betrieben wird.

6. Verbrennungsmotor nach einem der Ansprüche 1 bis 5,
**dadurch gekennzeichnet, dass** bei Diesel als flüssiger Kraftstoff der Verbrennungsmotor (1) in dem Bereich, in dem ein schädlicher HC-Überschuss entsteht, ausschließlich oder zumindest überwiegend ausschließlich mit Diesel betrieben wird.

7. Verbrennungsmotor nach einem der Ansprüche 1 bis 5,
**dadurch gekennzeichnet, dass** bei einem Ottomotor Benzin oder der gasförmige Kraftstoff als alleiniger oder zumindest überwiegend als alleiniger Kraftstoff in dem Bereich eingesetzt wird, in dem beim Mischbetrieb ein schädlicher HC-Überschuss entsteht.

8. Verbrennungsmotor nach einem der Ansprüche 1 bis 7,
**dadurch gekennzeichnet, dass** der flüssige bzw. gasförmige Kraftstoff exzentrisch nahe am Einlassventil in ein Saugrohr (27) oder einen Saugkanal eingespritzt wird.

9. Verbrennungsmotor nach einem der Ansprüche 1 bis 8,
**dadurch gekennzeichnet, dass** die Einspritzung des gasförmigen Kraftstoffes nahe dem Einlassventil (28) in den Verbrennungsraum (38) des Verbrennungsmotors (1) erfolgt.

10. Verbrennungsmotor nach einem der Ansprüche 1 bis 9,
**dadurch gekennzeichnet, dass** der Einspritzdruck des gasförmigen Kraftstoffes durch wenigstens ein Druckregelventil (13) an alle Betriebszustände anpassbar ist.

11. Nach/Umrüstsatz für einen Verbrennungsmotor nach einem der Ansprüche 1 bis 10,
**dadurch gekennzeichnet, dass** er wenigstens eine Halteplatte (31) für wenigstens eine Einspritzdüse (12) für gasförmigen Kraftstoff aufweist, an die eine Zuführleitung (11, 34) für den gasförmigen Kraftstoff an schließbar ist, und dass die Halteplatte (31) als Zwischenflansch zwischen einem Zylinderkopf (30) des Verbrennungsmotors (1) und der Saugrohranlage (27, 35) ausgebildet ist.

12. Nach/Umrüstsatz nach Anspruch 11,
**dadurch gekennzeichnet, dass** die Einspritzdüse (12) exzentrisch zu einem Durchlass (33) in der Halteplatte (31) angeordnet ist.

13. Nach/Umrüstsatz nach Anspruch 11 oder 12,
**dadurch gekennzeichnet, dass** in wenigstens einen der Durchlässe (33) der Halteplatte (31) wenigstens ein die Qualität des gasförmigen Kraftstoffes erfassender Sensor (40) ragt.
